(19) Europäisches Patentamt / European Patent Office / Office européen des brevets

(11) **EP 4 269 358 A1**

(12) **EUROPEAN PATENT APPLICATION**
published in accordance with Art. 153(4) EPC

(43) Date of publication:
**01.11.2023 Bulletin 2023/44**

(21) Application number: **21910800.8**

(22) Date of filing: **21.12.2021**

(51) International Patent Classification (IPC):
**C01G 45/00** (2006.01)  **H01M 4/36** (2006.01)
**H01M 4/505** (2010.01)

(52) Cooperative Patent Classification (CPC):
**C01B 25/30; C01G 45/00; C01G 45/12; H01M 4/36;
H01M 4/505;** Y02E 60/10

(86) International application number:
**PCT/JP2021/047382**

(87) International publication number:
**WO 2022/138660 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.12.2020 JP 2020216330**

(71) Applicant: **Tosoh Corporation
Yamaguchi 746-8501 (JP)**

(72) Inventors:
• **SUZUKI, Naoto**
  **Shunan-shi Yamaguchi 746-8501 (JP)**
• **FUJII, Yasuhiro**
  **Shunan-shi Yamaguchi 746-8501 (JP)**
• **TANIGUCHI, Jun**
  **Shunan-shi Yamaguchi 746-8501 (JP)**

(74) Representative: **TBK
Bavariaring 4-6
80336 München (DE)**

(54) **SPINEL-TYPE LITHIUM MANGANATE, METHOD FOR PRODUCING SAME AND USE OF SAME**

(57) Provided is a lithium secondary battery having excellent charge-discharge cycle performance at high temperatures and having low resistance and high power. A spinel-type lithium manganese oxide including a phosphate, the spinel-type lithium manganese oxide being represented by chemical formula: $Li_{1+X}Mn_{2-X-Y}M_YO_4$ (where $0.02 \leq X \leq 0.20$, $0.05 \leq Y \leq 0.30$, and M represents Al or Mg), wherein the volume of pores having a size of 0.6 $\mu$m or less is 0.003 $cm^3$/g or more and 0.2 $cm^3$/g or less, and the relative standard deviation of size of secondary particles is 25% or more and 45% or less, a method for producing the spinel-type lithium manganese oxide and applications of the spinel-type lithium manganese oxide.

**EP 4 269 358 A1**

## Description

Technical Field

The present invention relates to a spinel-type lithium manganese oxide, a method for producing the spinel-type lithium manganese oxide and applications of the spinel-type lithium manganese oxide and specifically to a spinel-type lithium manganese oxide that includes a phosphate, a method for producing such a spinel-type lithium manganese oxide and a lithium secondary battery that includes an electrode including the spinel-type lithium manganese oxide.

Background Art

Lithium secondary batteries have been widely used as rechargeable batteries for mobile terminals since they have higher energy densities than other rechargeable batteries. There have been studies for further performance enhancement, such as application to large batteries required to have a large capacity and a high power, such as stationary or vehicle-mounted batteries.

Cobalt-based materials ($LiCoO_2$) have been primarily used as positive electrode materials for lithium secondary batteries that are consumer small batteries included in mobile phones or the like, and nickel-based materials ($LiNi_{0.8}Co_{0.15}Al_{0.05}O_2$) or nickel-cobalt-manganese ternary materials (e.g., $LiNi_{0.5}Co_{0.2}Mn_{0.3}O_2$) have been primarily used as positive electrode materials for lithium secondary batteries that are stationary or vehicle-mounted batteries. However, cobalt raw materials and nickel raw materials are expensive since they are not abundant resources. Furthermore, it is not possible to achieve high power.

A spinel-type lithium manganese oxide, which is one of the types of manganese-based material, is one of the materials suitable for applications that require large batteries, since the raw material thereof, that is, manganese, is an abundant resource, inexpensive and excellent in terms of safety.

However, a spinel-type lithium manganese oxide is disadvantageous in terms of stability at high temperatures, that is, charge-discharge cyclic performance at high temperatures, which are particularly charge-discharge cyclic performance using carbon as negative electrode and storage characteristics. Solutions for the above issues have been anticipated. For example, in PTLs 1 and 2, where a spinel-type lithium manganese oxide that includes a phosphate is proposed, there is room for improvement in terms of charge-discharge cyclic stability at high temperatures, which are particularly cyclic stability using carbon electrode as negative electrode.

Moreover, further improvement of the performance of a spinel-type lithium manganese oxide, which has high power, has been anticipated in order to produce batteries having high power comparable to those of capacitors and high energy densities.

Citation List

Patent Literature

PTL 1: Japanese Patent No. 5556983
PTL 2: Japanese Unexamined Patent Application Publication No. 2017-31006

Summary of Invention

Technical Problem

An object of the present invention is to provide a spinel-type lithium manganese oxide that is excellent in terms of charge-discharge cyclic performance at high temperatures and, in particular, cyclic stability using a carbon as negative electrode and that has low resistance and high power and a lithium secondary battery that includes a positive electrode including the spinel-type lithium manganese oxide.

Solution to Problem

The inventors of the present invention conducted extensive studies of the spinel-type lithium manganese oxide and consequently found that the present invention, the summary of which is as describe below, may achieve the above-described object.

Specifically, the present invention includes [1] to [12] below.

[1] A spinel-type lithium manganese oxide comprising a phosphate, the spinel-type lithium manganese oxide being represented by chemical formula: $Li_{1+X}Mn_{2-X-Y}M_YO_4$ (where $0.02 \leq X \leq 0.20$, $0.05 \leq Y \leq 0.30$, and M represents Al or Mg), wherein a volume of pores having a size of 0.6 $\mu$m or less is 0.003 cm$^3$/g or more and 0.2 cm$^3$/g or less, and a relative standard deviation of sizes of secondary particles diameter is 25% or more and 45% or less.

[2] The spinel-type lithium manganese oxide according to [1], having a phosphorus/manganese molar ratio of 0.0015 or more and 0.1 or less.

[3] The spinel-type lithium manganese oxide according to [1] or [2], having a BET specific surface area of 0.8 m$^2$/g or more and 5.0 m$^2$/g or less.

[4] The spinel-type lithium manganese oxide according to any one of [1] to [3], wherein secondary particles of the spinel-type lithium manganese oxide have an average size of 4 $\mu$m or more and 20 $\mu$m or less.

[5] The spinel-type lithium manganese oxide according to any one of [1] to [4], wherein a content of SO$_4$ is 0.8 wt% or less.

[6] The spinel-type lithium manganese oxide according to any one of [1] to [5], wherein a content of Na is 3,000 wtppm or less.

[7] The spinel-type lithium manganese oxide according to any one of [1] to [6], wherein a content of boron is 100 wtppm or less.

[8] The spinel-type lithium manganese oxide according to any one of [1] to [7], wherein, a direct current resistance of a CR2032-type coin cell having Li counter electrode is 25 $\Omega$ or less in a 50%-charged state.

[9] A method for producing the spinel-type lithium manganese oxide according to any one of [1] to [8], the method comprising adding a manganese compound, a lithium compound, a compound including the element M according to Claim 1, a phosphoric acid compound and a boron compound to a solution in order to prepare a slurry including a mixture of the above compounds dispersed therein, the mixture having an average particle size of 1 $\mu$m or less, granulating the slurry by spray drying, calcining the resulting granules at a temperature of 700°C or more and 960°C or less in air or an oxygen-rich atmosphere (including a pure oxygen atmosphere), and subsequently performing disintegration.

[10] The method for producing the spinel-type lithium manganese oxide according to [9], wherein, subsequent to the calcining, performing water-washing to reduce a content of boron to 100 wtppm or less.

[11] An electrode comprising the spinel-type lithium manganese oxide according to any one of [1] to [8].

[12] A lithium secondary battery comprising the electrode according to [11], the electrode serving as a positive electrode.

Advantageous Effects of Invention

When the spinel-type lithium manganese oxide according to the present invention is used as a positive electrode material for lithium secondary batteries, it becomes possible to provide a lithium secondary battery that is excellent in terms of charge-discharge cyclic performance at high temperatures and, in particular, charge-discharge cyclic performance using carbon as negative electrode and that has low resistance and high power, compared with the related art.

Brief Description of Drawings

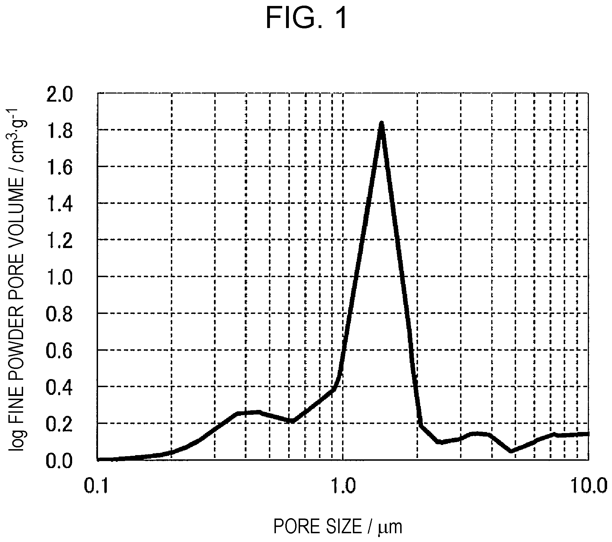

[Fig. 1] The distribution of pores in a phosphate-containing spinel-type lithium manganese oxide prepared in Example 1.

Description of Embodiments

Details of the present invention are described below.

The spinel-type lithium manganese oxide according to the present invention includes a phosphate. Examples of the phosphate include, but are not limited to, lithium phosphates, such as $Li_3PO_4$ and LiPOs; sodium phosphates, such as $Na_3PO_4$, $NaH_2PO_4$ and $Na_2HPO_4$; and potassium phosphates, such as $K_3PO_4$, $KH_2PO_4$ and $K_2HPO_4$. The phosphate is preferably $Li_3PO_4$ or LiPOs and is more preferably $Li_3PO_4$. Since the phosphate is included in the spinel-type lithium manganese oxide, excellent charge-discharge cyclic performance can be achieved at high temperatures when the spinel-type lithium manganese oxide is used as a positive electrode active material for lithium secondary batteries. The properties of the phosphate is not limited. Examples of the phosphate include, but are not limited to, a crystalline phosphate, a crystalline porous phosphate, a crystalline dense phosphate, an amorphous phosphate, an amorphous porous phosphate and an amorphous dense phosphate.

The spinel-type lithium manganese oxide according to the present invention is represented by chemical formula

$Li_{1+X}Mn_{2-X-Y}M_YO_4$ (where $0.02 \leq X \leq 0.20$, $0.05 \leq Y \leq 0.30$, and M represents Al or Mg). If the value X is less than 0.02, the capacity is likely to reduce when charge and discharge are performed at high temperatures. If the value X exceeds 0.20, a sufficiently high charge-discharge capacity cannot be achieved. If the value Y is less than 0.05, the capacity is likely to reduce when charge and discharge are performed at high temperatures. If the value Y exceeds 0.30, a sufficiently high charge-discharge capacity cannot be achieved. The values X and Y of the spinel-type lithium manganese oxide can be determined by composition analysis. Examples of the method for composition analysis include inductively coupled plasma atomic emission spectroscopy and atomic absorption spectrometry.

In the spinel-type lithium manganese oxide according to the present invention, the volume of pores having a size of 0.6 $\mu$m or less is 0.003 $cm^3$/g or more and 0.2 $cm^3$/g or less. When the volume of pores having a size of 0.6 $\mu$m or less is 0.003 $cm^3$/g or more and 0.2 $cm^3$/g or less, in the case where the spinel-type lithium manganese oxide is used as a material for the positive electrode of a lithium-ion secondary battery, the electrolyte solution is included inside the secondary particles of the spinel-type lithium manganese oxide and the area of contact between the particles of the spinel-type lithium manganese oxide and the electrolyte solution is increased. This reduces resistance and enhance high-rate performance. It is not preferable that the volume of pores having a size of 0.6 $\mu$m or less be less than 0.003 $cm^3$/g because, in such a case, the electrolyte solution cannot be included inside the secondary particles of the spinel-type lithium manganese oxide to a sufficient degree and the area of contact between the particles of the spinel-type lithium manganese oxide and the electrolyte solution is reduced. This increases resistance and, as a results, high-rate performance are likely to become degraded. It is not preferable that the volume of pores having a size of 0.6 $\mu$m or less be more than 0.2 $cm^3$/g because, in such a case, the density of the positive electrode is likely to be reduced. Furthermore, the amount of electrolyte solution included inside the secondary particles of the spinel-type lithium manganese oxide is increased and the area of contact between the particles of the spinel-type lithium manganese oxide and the electrolyte solution is increased accordingly. This increases the elution of manganese and, consequently, in the case where the spinel-type lithium manganese oxide is used as a material for the positive electrode of a lithium-ion secondary battery, durability at high temperatures is likely to become degraded. The volume of pores having a size of 0.6 $\mu$m or less is preferably 0.004 $cm^3$/g or more and 0.15 $cm^3$/g or less and is more preferably 0.015 $cm^3$/g or more and 0.1 $cm^3$/g or less. The volume of pores of the spinel-type lithium manganese oxide can be measured by mercury intrusion porosimetry.

The relative standard deviation of the sizes of secondary particles of the spinel-type lithium manganese oxide according to the present invention is 25% or more and 45% or less. When the relative standard deviation of the secondary particle sizes is 25% or more and 45% or less, the secondary particles have a sharp grain size distribution and, as a result, in the case where the spinel-type lithium manganese oxide is used as a material for the positive electrode of a lithium-ion secondary battery, the degree of uniformity at which the spinel-type lithium manganese oxide, a conductive agent and a binder are mixed with one another is increased. This enhances charge-discharge cycle performance and reduces resistance. The relative standard deviation of the secondary particle sizes is preferably 25% or more and 40% or less and is more preferably 27% or more and 35% or less.

In the spinel-type lithium manganese oxide according to the present invention, the phosphorus/manganese molar ratio is preferably 0.0015 or more and 0.1 or less and is more preferably 0.002 or more and 0.05 or less in order to further increase the rate at which, when the spinel-type lithium manganese oxide is used as a positive electrode active material of a lithium secondary battery, the reaction in which hydrogen fluoride included in the electrolyte solution of the lithium secondary battery in a trace amount is captured by the phosphate occurs, consequently further reduce the elution of manganese which occurs due to a reaction between the hydrogen fluoride and the spinel-type lithium manganese oxide, and further limit the capacity reduction caused as a result of charge and discharge being performed at high temperatures.

The BET specific surface area of the spinel-type lithium manganese oxide according to the present invention is preferably 0.8 $m^2$/g or more and 5.0 $m^2$/g or less and is more preferably 1.0 $m^2$/g or more and 4.0 $m^2$/g or less in order to achieve excellent charge-discharge cycle performance at high temperatures when the spinel-type lithium manganese oxide is used as a positive electrode active material of a lithium secondary battery and to reduce resistance and achieve further excellent high-rate performance.

The average size of secondary particles of the spinel-type lithium manganese oxide according to the present invention is preferably 4 $\mu$m or more and 20 $\mu$m or less and is more preferably 5 $\mu$m or more and 10 $\mu$m or less in order to reduce the lithium diffusion length inside the particles of the spinel-type lithium manganese oxide, thereby make it possible to achieve further excellent high-rate performance, and further enhance the packing density of the positive electrode mixture when the spinel-type lithium manganese oxide is used as a positive electrode active material of a lithium secondary battery.

The content of $SO_4$ in the spinel-type lithium manganese oxide according to the present invention is preferably 0.8 wt% or less and is more preferably 0.5 wt% or less in order to further increase the charge-discharge capacity of a lithium secondary battery that includes the spinel-type lithium manganese oxide according to the present invention as a positive electrode active material and achieve further excellent charge-discharge cyclic performance at high temperatures.

The content of Na in the spinel-type lithium manganese oxide according to the present invention is preferably 3,000 wtppm or less, is more preferably 1,500 wtppm or less, and is further preferably 1,000 wtppm or less in order to further increase the charge-discharge capacity of a lithium secondary battery that includes the spinel-type lithium manganese oxide according to the present invention as a positive electrode active material, enhance crystallinity, and achieve further excellent charge-discharge cyclic performance at high temperatures.

A method for producing the spinel-type lithium manganese oxide according to the present invention is descried below.

The spinel-type lithium manganese oxide according to the present invention can be produced by adding a manganese compound, a lithium compound, a compound including the element M according to Claim 1, a phosphoric acid compound and a boron compound to a solution to prepare a slurry including a mixture of the above compounds dispersed therein, the mixture having an average particle size of 1 $\mu$m or less, granulating the slurry by spray drying, calcining the resulting granules at a temperature of 700°C or more and 960°C or less in air or an oxygen-rich atmosphere (including a pure oxygen atmosphere), and subsequently performing disintegration. If the average particle size of the mixture is more than 1 pm, the volume of pores having a size of 0.6 $\mu$m or less is likely to be less than 0.003 cm$^3$.

Any of the manganese compound, the lithium compound, the compound including the element M according to Claim 1, the phosphoric acid compound and the boron compound may be a water-soluble substance.

The manganese compound is not limited. Examples of the manganese compound include, but are not limited to, electrolytic manganese dioxide, $Mn_3O_4$ and $Mn_2O_3$.

The lithium compound is not limited. Examples of the lithium compound include, but are not limited to, lithium carbonate, lithium hydroxide, lithium nitrate, lithium chloride, lithium iodide and lithium oxalate.

The phosphoric acid compound is not limited. Examples of the phosphoric acid compound include, but are not limited to, lithium phosphates, such as $Li_3PO_4$ and $LiPOs$, sodium phosphates, such as $Na_3PO_4$, $NaH_2PO_4$ and $Na_2HPO_4$, potassium phosphates, such as $K_3PO_4$, $KH_2PO_4$ and $K_2HPO_4$, magnesium phosphates, such as $Mg_3(PO_4)_2$, $MgHPO_4$ and $Mg(H_2PO_4)_2$, phosphoric acids of ammonium, such as $NH_4H_2PO_4$ and $(NH_4)_2HPO_4$, and hydrogen phosphates, such as $H_3PO_4$.

The compound including the element M (Al or Mg) according to Claim 1 is not limited. Examples of such a compound include, but are not limited to, $Al(OH)_3$, $AlOOH$, $Al_2O_3$, $Mg(OH)_2$ and $MgO$.

The boron compound is not limited. Examples of the boron compound include, but are not limited to, $H_3BO_3$, $B_2O_3$, $Li_2O \cdot nB_2O_3$ (n = 1 to 5) .

In the slurry that includes a mixture of the manganese compound, the lithium compound, the compound including the element M according to Claim 1, the phosphoric acid compound and the boron compound dispersed therein, the average particle size of the mixture is 1 $\mu$m or less and is preferably 0.3 $\mu$m or more and 0.7 $\mu$m or less. The above average particle size can be achieved by adding the above compounds to a solution and subsequently performing crush mixing. Examples of a crush mixer include a wet medium stirring mill, a ball mill and a vibration mill. The manganese compound, the lithium compound, the compound including the element M according to Claim 1, the phosphoric acid compound and the boron compound may be partially or entirely dissolved in water.

Examples of the solution to which the above compounds are added include pure water and water.

The slurry prepared by wet crush mixing is granulated by spray drying. For spray drying, a common spray dryer capable of spraying the slurry with a rotary disc or a fluid nozzle and drying the droplets with hot air can be used.

The calcining performed in the production of the spinel-type lithium manganese oxide according to the present invention is performed at a temperature of 700°C or more and 960°C or less in air or an oxygen-rich atmosphere (including a pure oxygen atmosphere), that is, an oxygen atmosphere having an oxygen content of 18 to 100 vol%. If the above calcining temperature is less than 700°C, the volume of pores of the spinel-type lithium manganese oxide which have a size of 0.6 $\mu$m or less is increased to an excessive degree and, consequently, density is likely to be reduced when the spinel-type lithium manganese oxide is used as a material for a positive electrode. If the calcining temperature is higher than 960°C, the amount of oxygen deficiency in the spinel-type lithium manganese oxide is increased and, as a result, the charge-discharge cycle performance of a lithium secondary battery that includes the spinel-type lithium manganese oxide as a positive electrode active material is likely to become degraded. The calcining is preferably performed at a temperature of 750°C or more and 850°C or less.

In order to enhance charge-discharge cycle performance and reduce resistance, it is preferable to wash the spinel-type lithium manganese oxide according to the present invention with water to reduce the content of the boron compound. It is preferable to reduce the content of the boron compound to 100 wtppm or less by water-washing.

It is preferable to disintegrate the spinel-type lithium manganese oxide in order to achieve the intended particle size because the secondary particles are likely to consolidate with one another during calcining. The disintegration is preferably performed using a shearing force in order to further limit generation of fine powder particles.

It is preferable to pass the disintegrated spinel-type lithium manganese oxide through a sieve in order to remove coarse particles larger than the thickness of the positive electrode. The size of openings of the sieve is preferably 200 $\mu$m or less and is more preferably 150 $\mu$m or less.

Using the spinel-type lithium manganese oxide including the phosphate according to the present invention as a material constituting a positive electrode for lithium secondary batteries enables the production of a lithium secondary battery that has excellent charge-discharge cycle performance at high temperatures and that has low resistance and high power, which has been impossible in the related art.

The components of the lithium secondary battery which are other than the positive electrode are not limited. The negative electrode is composed of a material capable of occluding and releasing Li, such as a carbon-based material, a tin oxide-based material, $Li_4Ti_5O_{12}$, SiO, or a material capable of alloying with Li. Examples of the material capable of alloying with Li include a silicon-based material and an aluminum-based material. Examples of the electrolyte include an organic electrolyte solution that includes an organic solvent and a Li salt and appropriate additives that are dissolved in the organic solvent, a solid electrolyte conductive to Li ions, and a combination thereof.

EXAMPLES

The present invention is described with reference to specific examples below. It should be noted that the present invention is not limited to the examples below.

<Composition Analysis and Measurement of $SO_4$, Na and Boron Contents>

The composition of each of the spinel-type lithium manganese oxides prepared in Examples and Comparative Examples and the contents of $SO_4$, Na and boron in the spinel-type lithium manganese oxide were determined by dissolving the spinel-type lithium manganese oxide in an aqueous hydrochloric acid-hydrogen peroxide mixture solution and analyzing the solution using an inductively coupled plasma atomic emission spectrometer (product name: ICP-AES, produced by PerkinElmer Japan Co., Ltd.).

<Measurement of Pore Volume>

The volume of the pores of each of the spinel-type lithium manganese oxides prepared in Examples and Comparative Examples was measured with an automatic mercury porosimeter pore distribution analyzer (product name: AutoPore V 9600, produced by MICROMERITICS). The mercury intrusion pressure was set to 0.48 to 33,000 psia.

<Measurement of BET Specific Surface Area>

Into a glass cell for measurement of BET specific surface area, 1.0 g of the sample was charged. Then, the sample was subjected to a dehydration treatment at 150°C for 30 minutes in a nitrogen flow in order to remove the moisture adhered to the powder particles.

The BET specific surface area of the treated sample was measured by a single-point method with a BET measurement apparatus (product name: MICROMERITICS DeSorbIII, produced by Shimadzu Corporation) using a nitrogen 30%-helium 70% mixed gas as an adsorption gas.

<Measurement of Average Size of Secondary Particles and Relative Standard Deviation of Secondary Particle Sizes>

The average size ($D_{50}$) of secondary particles of the lithium manganese oxide and the standard deviation of the particle sizes were determined using a particle size distribution analyzer (product name: MT3000II series, produced by MicrotracBEL).

The relative standard deviation of the secondary particle sizes was determined from the average size of the secondary particles and the above standard deviation using the formula below.

```
Relative Standard Deviation (%) = (Standard Deviation

of Particle Sizes)/(Average Particle Size) × 100
```

<Measurement of Initial Capacity and Direct Current Resistance>

The positive electrode was prepared by mixing 1.0 g of one of the spinel-type lithium manganese oxides prepared in Examples and Comparative Examples, 0.032 g of acetylene black (product name: DENKA BLACK, produced by Denka Company Limited), 0.307 mL of a 10-wt% polyvinylidene fluoride/N-methyl-2-pyrrolidone solution (polyvinylidene fluoride: 0.032 g), and 0.751 mL of N-methyl-2-pyrrolidone (spinel-type lithium manganese oxide:acetylene black:polyvinylidene fluoride = 94:3:3 by weight) with one another using a planetary centrifugal mixer (product name: AR-100, produced by THINKY CORPORATION) to prepare a positive electrode material slurry, applying the positive electrode material slurry to an aluminum foil, drying the resulting coating film at 150°C for 30 minutes, subsequently punching the foil to a diameter of 15.958 mm, then performing uniaxial pressing at 3 ton/cm$^2$, and performing drying at 150°C for 2 hours under reduced pressure. The amount of the slurry deposited was adjusted such that the amount of the spinel-type lithium manganese oxide deposited was 5 mg/cm$^2$.

A CR2032-type coin cell was prepared using a Li foil punched to a diameter of 16 mm as a negative electrode, an electrolyte solution including a mixed solvent containing ethylene carbonate and dimethyl carbonate (1:2 by volume) and 1 mol/dm$^3$ of LiPF$_6$ dissolved in the mixed solvent and a separator (product name: Celgard, produced by Polypore International, Inc.).

The above battery was subjected to one cycle of charge and discharge within the cell voltage range of 4.3 to 3.0 V at a current of 0.1 mA and 24°C. The discharge capacity was considered as initial capacity.

Subsequently, charge was performed to a capacity equal to 50% of the initial capacity, and direct current resistance was measured at 24°C. In the measurement of direct current resistance, charge was performed at a current of 2 mA for 10 seconds, and a closed circuit voltage was measured. Then, discharge was performed at a current of 0.2 mA for 100 seconds, and a rest was taken for 1 hour. Subsequently, charge was performed at a current of 5 mA for 10 seconds, and a closed circuit voltage was measured. Then, discharge was performed at a current of 0.2 mA for 250 seconds, and a rest was taken for 1 hour. Subsequently, charge was performed at a current of 10 mA for 10 seconds, and closed circuit voltage was measured. Then, discharge was performed at a current of 0.2 mA for 500 seconds, and a rest was taken for 1 hour. The above closed circuit voltages were plotted with respect to the corresponding current values. The slope was considered as direct current resistance.

<Charge-Discharge Cycle Test Using Carbon as Negative Electrode>

A positive electrode similar to that prepared in the measurement of initial capacity was used.

The negative electrode was prepared by mixing 2.0 g of spherical natural graphite and 2.104 mL of a 10-wt% polyvinylidene fluoride/N-methyl-2-pyrrolidone solution (polyvinylidene fluoride: 0.221 g) (graphite:polyvinylidene fluoride = 90:10 by weight) with each other using a planetary centrifugal mixer (product name: AR-100, produced by THINKY CORPORATION) to prepare a negative electrode material slurry, applying the negative electrode material slurry to a copper foil, drying the resulting coating film at 150°C for 30 minutes, subsequently punching the foil to a diameter of 16.156 mm, then performing uniaxial pressing at 3 ton/cm$^2$, and performing drying at 150°C for 2 hours under reduced pressure. The amount of the slurry deposited was adjusted such that the amount of the spherical natural graphite deposited was 1.8 mg/cm$^2$.

A CR2032-type coin cell was prepared using the positive electrode, the negative electrode, 0.2 mL of an electrolyte solution including a mixed solvent containing ethylene carbonate and dimethyl carbonate (1:2 by volume) and 1 mol/dm$^3$ of LiPF$_6$ dissolved in the mixed solvent and a separator (product name: Celgard, produced by Polypore International, Inc.).

The above battery was subjected to one cycle of constant-current constant-voltage charge and constant-current discharge within the cell voltage range of 4.25 to 3.0 V at a current of 0.1 mA and 24°C. The battery was subsequently subjected to one cycle of constant-current constant-voltage charge and constant-current discharge within the cell voltage range of 4.25 to 3.0 V at a current of 0.2 mA and 24°C. The discharge capacity was considered as cell capacity. The battery was then subjected to 50 cycles of constant-current constant-voltage charge and constant-current discharge at 45°C within the cell voltage range of 4.25 to 3.0 V at a current density corresponding to one-hour discharge rate relative to the battery capacity. A charge-discharge cycle retention using carbon as negative electrode was determined from the ratio between the discharge capacities measured in the 50th and 1st cycles. Note that the constant-voltage charge was terminated when the charge current was attenuated to 1/10 of the current applied during the constant-current charge.

EXAMPLE 1

To pure water, 374 g of lithium carbonate, 1533 g of electrolytic manganese dioxide, 73 g of aluminum hydroxide, 15 g of trilithium phosphate, and 3 g of boric acid were added to prepare 10 L of a slurry. Subsequently, crushing was performed with a crusher (product name: DYNO-MILL, produced by Shinmaru Enterprises Corporation) for 3 hours. The average particle size (D$_{50}$) of the mixture of lithium carbonate, electrolytic manganese dioxide, aluminum hydroxide, trilithium phosphate and boric acid which was measured using a particle size distribution analyzer (product name: MT3000II series, produced by MicrotracBEL) was 0.6 μm. The resulting slurry was subjected to a spray dryer (produced by Ohkawara Kakohki Co., Ltd.) in order to remove water by evaporation. Hereby, spherical dry granules were prepared. In the above spray drying, the inlet temperature of hot air was set to 250°C.

In a box furnace in which air was circulated at a rate of 5 L/min, 300 g of the dry granules were calcined at 750°C for 6 hours and subsequently cooled to room temperature. The heating rate was set to 100 °C/hr. The cooling rate was set to 20 °C/hr in the range of 800°C to 600°C and 100 °C/hr in the range of 600°C to room temperature. Pure water was added to the calcined material, which was stirred for 1 hour, then filtered, and subsequently dried at 150°C. The resulting material was disintegrated with a high power compact crusher (product name: Rotary Crusher, produced by Osaka Chemical Co., Ltd.) and subsequently passed through a sieve having an opening of 150 $\mu$m. Hereby, phosphate-containing spinel-type lithium manganese oxide was prepared.

The composition of the phosphate-containing spinel-type lithium manganese oxide was $Li_{1.10}Mn_{1.80}Al_{0.10}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the results of measurement of the phosphorus/manganese molar ratio, the volume of pores having a size of 0.6 $\mu$m or less, the BET specific surface area, the average size of secondary particles of lithium manganese oxide, the relative standard deviation of the sizes of secondary particle of the lithium manganese oxide, and the contents of $SO_4$, Na and B (hereinafter, referred to as "measurement results"). Table 2 lists the battery performance.

[Table 1]

| | PHOSPHORUS/ MANGANESE MOLAR RATIO | PORE VOLUME (cm³/g) | AVERAGE SIZE OF SECONDARY PARTICLES OF LITHIUM MANGANESE OXIDE (μm) | RELATIVE STANDARD DEVIATION OF SECONDARY PARTICLE SIZES OF LITHIUM MANGANESE OXIDE (%) | BET SPECIFIC SURFACE AREA (m²/g) | SO₄ (wt%) | Na (wtppm) | B (wtppm) |
|---|---|---|---|---|---|---|---|---|
| EXAMPLE 1 | 0.0065 | 0.0925 | 4.5 | 32 | 3.06 | 0.40 | 400 | <10 |
| EXAMPLE 2 | 0.0211 | 0.0200 | 9.2 | 38 | 1.25 | 0.48 | 340 | <10 |
| EXAMPLE 3 | 0.0075 | 0.0221 | 6.2 | 30 | 1.28 | 0.32 | 310 | <10 |
| EXAMPLE 4 | 0.0074 | 0.0035 | 5.4 | 31 | 0.81 | 0.27 | 250 | <10 |
| EXAMPLE 5 | 0.0143 | 0.0520 | 5.6 | 32 | 2.03 | 0.58 | 270 | <10 |
| EXAMPLE 6 | 0.0205 | 0.0482 | 5.6 | 31 | 1.94 | 0.42 | 290 | <10 |
| EXAMPLE 7 | 0.0220 | 0.0660 | 5.3 | 31 | 2.40 | 0.54 | 200 | <10 |
| EXAMPLE 8 | 0.0290 | 0.0298 | 5.6 | 25 | 1.40 | 0.60 | 180 | <10 |
| EXAMPLE 9 | 0.0131 | 0.0270 | 6.2 | 30 | 1.46 | 0.42 | 170 | <10 |
| EXAMPLE 10 | 00273 | 0.0061 | 9.0 | 43 | 0.87 | 0.43 | 160 | <10 |
| EXAMPLE 11 | 0.0260 | 0.0157 | 8.6 | 44 | 1.07 | 0.42 | 150 | <10 |
| COMPARATIVE EXAMPLE 1 | 0.0 | 0.0214 | 6.3 | 31 | 1.13 | 0.30 | 140 | <10 |
| COMPARATIVE EXAMPLE 2 | 0.0080 | 0.0020 | 6.2 | 58 | 0.77 | 1.02 | 95 | <10 |

[Table 2]

| | BATTERY PERFORMANCE | | |
|---|---|---|---|
| | INITIAL CAPACITY (mAh/g) | DIRECT CURRENT RESISTANCE ($\Omega$) | CYCLE RETENTION USING CARBON AS NEGATIVE ELECTRODE (%) |
| EXAMPLE 1 | 95 | 16 | 83.8 |
| EXAMPLE 2 | 98 | 22 | 85.2 |
| EXAMPLE 3 | 95 | 15 | 84.8 |
| EXAMPLE 4 | 92 | 18 | 85.4 |
| EXAMPLE 5 | 98 | 17 | 82.6 |
| EXAMPLE 6 | 98 | 17 | 82.7 |
| EXAMPLE 7 | 89 | 23 | 84.0 |
| EXAMPLE 8 | 88 | 22 | 83.7 |
| EXAMPLE 9 | 95 | 23 | 84.6 |
| EXAMPLE 10 | 91 | 20 | 84.3 |
| EXAMPLE 11 | 93 | 23 | 85.1 |
| COMPARATIVE EXAMPLE 1 | 96 | 33 | 81.9 |
| COMPARATIVE EXAMPLE 2 | 92 | 26 | 85.1 |

Fig. 1 illustrates the distribution of pores of the phosphate-containing spinel-type lithium manganese oxide.

EXAMPLE 2

A phosphate-containing spinel-type lithium manganese oxide was prepared as in Example 1, except that the amount of the boric acid used was changed to 0.6 g and the calcining temperature was changed to 900°C.

The composition of the phosphate-containing spinel-type lithium manganese oxide was $Li_{1.09}Mn_{1.81}Al_{0.10}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 3

A phosphate-containing spinel-type lithium manganese oxide was prepared as in Example 1, except that the calcining temperature was changed to 800°C.

The composition of the phosphate-containing spinel-type lithium manganese oxide was $Li_{1.10}Mn_{1.80}Al_{0.10}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 4

A phosphate-containing spinel-type lithium manganese oxide was prepared as in Example 1, except that the calcining temperature was changed to 900°C.

The composition of the phosphate-containing spinel-type lithium manganese oxide was $Li_{1.11}Mn_{1.79}Al_{0.10}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 5

A phosphate-containing spinel-type lithium manganese oxide was prepared as in Example 1, except that the amount of the trilithium phosphate used was changed to 31 g, the amount of the boric acid used was changed to 1 g, and the calcining temperature was changed to 810°C.

The composition of the phosphate-containing spinel-type lithium manganese oxide was $Li_{1.09}Mn_{1.31}Al_{0.10}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 6

A phosphate-containing spinel-type lithium manganese oxide was prepared as in Example 5, except that the amount of the trilithium phosphate used was changed to 46 g.

The composition of the phosphate-containing spinel-type lithium manganese oxide was $Li_{1.09}Mn_{1.81}Al_{0.10}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 7

To pure water, 356 g of lithium carbonate, 1577 g of electrolytic manganese dioxide, 53 g of magnesium hydroxide, 47 g of trilithium phosphate, and 1.7 g of boric acid were added to prepare 10 L of a slurry. Subsequently, crushing was performed with a crusher (product name: DYNO-MILL, produced by Shinmaru Enterprises Corporation) for 3 hours. The average particle size ($D_{50}$) of the mixture of lithium carbonate, electrolytic manganese dioxide, magnesium hydroxide, trilithium phosphate and boric acid which was measured using a particle size distribution analyzer (product name: MT3000II series, produced by MicrotracBEL) was 0.6 $\mu$m. The resulting slurry was subjected to a spray dryer (produced by Ohkawara Kakohki Co., Ltd.) in order to remove water by evaporation. Hereby, spherical dry granules were prepared. In the above spray drying, the inlet temperature of hot air was set to 250°C.

In a box furnace in which air was circulated at a rate of 5 L/min, 300 g of the dry granules were calcined at 775°C for 6 hours and subsequently cooled to room temperature. The heating rate was set to 100 °C/hr. The cooling rate was set to 20 °C/hr in the range of 7750°C to 600°C and 100 °C/hr in the range of 600°C to room temperature. Pure water was added to the calcined material, which was stirred for 1 hour, then filtered, and subsequently dried at 150°C. The resulting material was disintegrated with a high-power compact crusher (product name: Rotary Crusher, produced by Osaka Chemical Co., Ltd.) and subsequently passed through a sieve having an opening of 150 $\mu$m. Hereby, phosphate-containing spinel-type lithium manganese oxide was prepared.

The composition of the phosphate-containing spinel-type lithium manganese oxide was $Li_{1.07}Mn_{1.83}Mg_{0.10}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 8

A phosphate-containing spinel-type lithium manganese oxide was prepared as in Example 7, except that the amount of the trilithium phosphate used was changed to 63 g and the calcining temperature was changed to 800°C.

The composition of the phosphate-containing spinel-type lithium manganese oxide was $Li_{1.07}Mn_{1.83}Mg_{0.10}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 9

A phosphate-containing spinel-type lithium manganese oxide was prepared as in Example 7, except that the amount of the trilithium phosphate used was changed to 31 g and the calcining temperature was changed to 800°C.

The composition of the phosphate-containing spinel-type lithium manganese oxide was $Li_{1.06}Mn_{1.34}Mg_{0.10}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 10

A phosphate-containing spinel-type lithium manganese oxide was prepared as in Example 7, except that the amount of the trilithium phosphate used was changed to 62 g and the calcining temperature was changed to 850°C.

The composition of the phosphate-containing spinel-type lithium manganese oxide was $Li_{1.07}Mn_{1.80}Mg_{0.10}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

EXAMPLE 11

A phosphate-containing spinel-type lithium manganese oxide was prepared as in Example 7, except that the amount of the trilithium phosphate used was changed to 62 g, the amount of the boric acid used was changed to 2.8 g, and the calcining temperature was changed to 850°C.

The composition of the phosphate-containing spinel-type lithium manganese oxide was $Li_{1.06}Mn_{1.84}Mg_{0.10}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

COMPARATIVE EXAMPLE 1

A spinel-type lithium manganese oxide was prepared as in Example 3, except that trilithium phosphate was not used.

The composition of the spinel-type lithium manganese oxide was $Li_{1.10}Mn_{1.80}Al_{0.10}O_4$. The results of the XRD measurement confirmed that the spinel-type lithium manganese oxide had a single phase of JCPDS No. 35-782 ($LiMn_2O_4$). Table 1 lists the measurement results. Table 2 lists the battery performance.

COMPARATIVE EXAMPLE 2

With 300 g of electrolytic manganese dioxide having an average particle size of 3 pm, 71 g of lithium carbonate having an average particle size of 3 pm, 6 g of magnesium hydroxide having an average particle size of 2 pm, and 3 g of trilithium phosphate having an average particle size of 3 $\mu$m were mixed by dry process. The resulting mixture was calcined at 930°C for 6 hours in a box furnace in which air was circulated at a rate of 5 L/min and subsequently cooled to room temperature. The heating rate was set to 100 °C/hr. The cooling rate was set to 20 °C/hr in the range of 900°C to 600°C and 100 °C/hr in the range of 600°C to room temperature. The calcined material was disintegrated with a high-power compact crusher (product name: Rotary Crusher, produced by Osaka Chemical Co., Ltd.) and subsequently passed through a sieve having an opening of 32 $\mu$m. Hereby, phosphate-containing spinel-type lithium manganese oxide was prepared.

The composition of the phosphate-containing spinel-type lithium manganese oxide was $Li_{1.12}Mn_{1.82}Mg_{0.06}O_4$. The results of the XRD measurement confirmed that the phosphate-containing spinel-type lithium manganese oxide had a mixed phase including JCPDS No. 35-782 ($LiMn_2O_4$) and JCPDS No. 25-1030 ($Li_3PO_4$). Table 1 lists the measurement results. Table 2 lists the battery performance.

The entire contents of the specification, claims, drawings, and abstract of Japanese Patent Application No. 2020-216330 filed on December 25, 2020, are cited and incorporated herein as the disclosure of the specification of the present invention.

Industrial Applicability

Since the phosphate-containing spinel-type lithium manganese oxide according to the present invention has pores having a pore volume and has a secondary particle size, the phosphate-containing spinel-type lithium manganese oxide can be used as a positive electrode active material for lithium secondary batteries that have excellent charge-discharge cyclic performance and, in particular, excellent charge-discharge cyclic performance using carbon as negative electrode at high temperatures and that have high power.

**Claims**

**1.** A spinel-type lithium manganese oxide comprising a phosphate, the spinel-type lithium manganese oxide being represented by chemical formula: $Li_{1+X}Mn_{2-X-Y}M_YO_4$ (where $0.02 \leq X \leq 0.20$, $0.05 \leq Y \leq 0.30$, and M represents Al or Mg), wherein a volume of pores having a size of 0.6 $\mu$m or less is 0.003 $cm^3/g$ or more and 0.2 $cm^3/g$ or less, and a relative standard deviation of sizes of secondary particles is 25% or more and 45% or less.

2. The spinel-type lithium manganese oxide according to Claim 1, having a phosphorus/manganese molar ratio of 0.0015 or more and 0.1 or less.

3. The spinel-type lithium manganese oxide according to Claim 1 or 2, having a BET specific surface area of 0.8 $m^2/g$ or more and 5.0 $m^2/g$ or less.

4. The spinel-type lithium manganese oxide according to any one of Claims 1 to 3, wherein secondary particles of the spinel-type lithium manganese oxide have an average size of 4 $\mu$m or more and 20 $\mu$m or less.

5. The spinel-type lithium manganese oxide according to any one of Claims 1 to 4, wherein a content of $SO_4$ is 0.8 wt% or less.

6. The spinel-type lithium manganese oxide according to any one of Claims 1 to 5, wherein a content of Na is 3,000 wtppm or less.

7. The spinel-type lithium manganese oxide according to any one of Claims 1 to 6, wherein a content of boron is 100 wtppm or less.

8. The spinel-type lithium manganese oxide according to any one of Claims 1 to 7, wherein a direct current resistance of a CR2032-type coin cell having Li counter electrode is 25 $\Omega$ or less in a 50%-charged state.

9. A method for producing the spinel-type lithium manganese oxide according to any one of Claims 1 to 8, the method comprising adding a manganese compound, a lithium compound, a compound including the element M according to Claim 1, a phosphoric acid compound and a boron compound to a solution in order to prepare a slurry including a mixture of the above compounds dispersed therein, the mixture having an average particle size of 1 $\mu$m or less, granulating the slurry by spray drying, calcining the resulting granules at a temperature of 700°C or more and 960°C or less in air or an oxygen-rich atmosphere (including a pure oxygen atmosphere), and subsequently performing disintegration.

10. The method for producing the spinel-type lithium manganese oxide according to Claim 9, wherein, subsequent to the calcining, performing water-washing to reduce a content of boron to 100 wtppm or less.

11. An electrode comprising the spinel-type lithium manganese oxide according to any one of Claims 1 to 8.

12. A lithium secondary battery comprising the electrode according to Claim 11, the electrode serving as a positive electrode.

FIG. 1

## INTERNATIONAL SEARCH REPORT

| International application No. |
|---|
| **PCT/JP2021/047382** |

### A. CLASSIFICATION OF SUBJECT MATTER

*C01G 45/00*(2006.01)i; *H01M 4/36*(2006.01)i; *H01M 4/505*(2010.01)i
FI: H01M4/505; H01M4/36 A; C01G45/00

According to International Patent Classification (IPC) or to both national classification and IPC

### B. FIELDS SEARCHED

Minimum documentation searched (classification system followed by classification symbols)

C01G45/00; H01M4/36; H01M4/505

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-031006 A (SHIN NIPPON DENKO KK) 09 February 2017 (2017-02-09) claims 1-6, examples 1-11, comparative examples 3-4 | 1-12 |
| A | JP 2018-095529 A (SHIN NIPPON DENKO KK) 21 June 2018 (2018-06-21) claims 1-5, examples 1-8, 11-16, comparative examples 1-6 | 1-12 |
| A | WO 2009/084214 A1 (TODA KOGYO CORP.) 09 July 2009 (2009-07-09) claims 1-10, examples 1-5, comparative examples 2, 5 | 1-12 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 March 2022** | **22 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2021/047382**

| Patent document cited in search report | | | Publication date (day/month/year) | Patent family member(s) | Publication date (day/month/year) |
|---|---|---|---|---|---|
| JP | 2017-031006 | A | 09 February 2017 | (Family: none) | |
| JP | 2018-095529 | A | 21 June 2018 | (Family: none) | |
| WO | 2009/084214 | A1 | 09 July 2009 | US 2010/0327221 A1 claims 1-10, examples 1-5, comparative examples 2, 5 JP 2009-176732 A EP 2226293 A1 KR 10-2010-0106987 A CN 101910066 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5556983 B
- JP 2017031006 A

- JP 2020216330 A